# EUROPÄISCHE PATENTANMELDUNG

(11) **EP 4 471 690 A1**
(43) Veröffentlichungstag der Anmeldung: **04.12.2024**
(21) Anmeldenummer: 23176925.8
(22) Anmeldetag: 02.06.2023
(51) Int. Cl.: G06Q 10/0631, G06Q 10/10, G06Q 50/08

(54) **VERFAHREN ZUR PLANUNG UND ZUR HERSTELLUNG EINES GEBÄUDES ODER EINES GEBÄUDETEILS SOWIE COMPUTERPROGRAMMPRODUKT**

(71) Anmelder: Hilti Aktiengesellschaft, 9494 Schaan (LI)
(72) Erfinder: Kroenert, Nils, 9472 Grabs (CH); Zanona, Julia, 6800 Feldkirch (AT)
(74) Vertreter: Hilti Aktiengesellschaft Corporate Intellectual Property

(57) **Zusammenfassung**

Die Erfindung betrifft ein **Verfahren (100) zum Erzeugen einer Planung (36)** eines Gebäudeteils (56) und / oder eines Gebäudes mit Hilfe eines Planungssystems (40), wobei wenigstens eine Maschineneigenschaft (38) einer mobilen Werkzeugmaschine (10) in das Planungssystem (40) über eine Datenschnittstelle (54) zur Eingabe der wenigstens einen Maschineneigenschaft (38) in das Planungssystem (40) eingegeben wird. Weiter betrifft die Erfindung ein Computerprogrammprodukt (52) sowie ein Planungssystem (40).

## Beschreibung

Die Erfindung geht aus von einem Verfahren zum Erzeugen einer Planung eines Gebäudeteils mit Hilfe eines Planungssystems.

Insbesondere zur Errichtung komplexer Gebäude, beispielsweise von Bürokomplexen, werden in der Regel vorab Gebäudeteile geplant. Beispielsweise werden erforderliche Bauelemente der Gebäudetechnik sowie deren späterer Verlauf innerhalb des Gebäudeteils bzw. des Gebäudes geplant. Eine solche Planung kann die spätere Bauumsetzung, insbesondere die Herstellungsdauer und die Herstellungskosten, des zu errichtenden Gebäudeteils bzw. Gebäudes erheblich beeinflussen.

Wünschenswert und Aufgabe der vorliegenden Erfindung ist es daher, ein Verfahren sowie wenigstens ein Hilfsmittel zur Erzeugung einer Planung mit Hilfe eines Planungssystems anzubieten, die eine spätere Bauumsetzung mit geringem Zeitaufwand und / oder zu geringen Herstellungskosten ermöglichen.

Gelöst wird die Aufgabe durch ein **Verfahren zum Erzeugen einer Planung** eines Gebäudeteils mit Hilfe eines Planungssystems, wobei wenigstens eine Maschineneigenschaft einer mobilen Werkzeugmaschine in das Planungssystem über eine Datenschnittstelle zur Eingabe der wenigstens einen Maschineneigenschaft in das Planungssystem eingegeben wird. Dies ermöglicht es, unter Berücksichtigung der Maschineneigenschaft das Gebäudeteil zu planen. Beispielsweise kann dadurch ermöglicht werden, dass die mobile Werkzeugmaschine überhaupt einsetzbar ist und / oder dass die mobile Werkzeugmaschine häufiger und / oder mit weniger Unterbrechungen einsetzbar ist. Somit lässt sich beispielsweise ein Automatisierungsgrad der Bauumsetzung verbessern. Spätere und dadurch in der Regel besonders kosten- und zeitaufwändige Umplanungen, insbesondere weil das geplante Gebäudeteil schlicht nicht mit den vorhandenen Mitteln, insbesondere mit der mobilen Werkzeugmaschine, herstellbar ist, können vermieden werden. Im Ergebnis können somit Herstellungskosten und / oder Herstellungsdauern zur Herstellung des Gebäudeteils reduzieren werden.

Die Planung kann ein CAD-Modell, insbesondere ein Building Information Model (im Folgenden: "BIM") -Modell, umfassen. Unter einem Gebäudeteil kann ein Teil eines Gebäudes, insbesondere eines Hochbau-Gebäudes, oder auch das gesamte Gebäude verstanden werden. Das Gebäudeteil kann beispielsweise eine Wand, eine Decke und / oder einen Boden umfassen. Es kann sich um ein überwiegend aus Beton, Holz und / oder Stahl zu bauendes Gebäudeteil handeln. Es kann sich um ein auf der Landfläche und / oder in, auf und / oder über einer Wasserfläche zu errichtendes Gebäudeteil handeln. Das Verfahren ist besonders vorteilhaft bei Gebäuden mit hoher Bauhöhe, beispielsweise Wolkenkratzern oder Ölplattformen, anwendbar, da sich bei solchen Gebäuden Effizienzvorteile besonders umfangreich auswirken.

Die mobile Werkzeugmaschine kann eine Bohrmaschine, beispielsweise eine Hammerbohrmaschine beispielsweise zum Bohren von Beton, eine Meißelmaschine, eine Sägemaschine, eine Schleifmaschine, eine Setzmaschine, beispielsweise ein Nagler oder ein Schraubensetzgerät, oder dergleichen sein und / oder umfassen.

Bei einer Klasse von Ausführungsformen ist die mobile Werkzeugmaschine als Bauroboter ausgebildet. Der Bauroboter kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Der Bauroboter kann einen Manipulator aufweisen. Der Manipulator kann als Roboterarm ausgebildet sein. Denkbar ist auch, dass die mobile Werkzeugmaschine ein Transportroboter zum Transport von Verbrauchsmaterial, Werkzeugen oder dergleichen auf einer Baustelle ist. Der Manipulator kann auch eine Hubvorrichtung aufweisen. Die Hubvorrichtung kann das vom Manipulator erreichbare Arbeitsvolumen vergrößern. Der Manipulator kann wenigstens drei Freiheitsgrade aufweisen. Insbesondere kann er wenigstens sechs Freiheitsgrade aufweisen. Am Manipulator kann ein Endeffektor ausgebildet und / oder angeordnet sein. Der Endeffektor kann eine Werkzeugmaschine und / oder ein Werkzeug umfassen. Beispielsweise kann der Endeffektor eine elektrische Werkzeugmaschine aufweisen. Die elektrische Werkzeugmaschine kann beispielsweise eine der vorangehend genannten Maschinen bzw. Geräte sein und / oder umfassen. Denkbar ist auch, dass der Endeffektor und / oder die Werkzeugmaschine zum Markieren ausgebildet sind. Beispielsweise kann der Endeffektor ein Farbsprühgerät aufweisen.

Der Endeffektor und / oder die Werkzeugmaschine kann auch eine Bildaufnahmeeinheit, beispielsweise eine Kamera, ein LIDAR und / oder dergleichen, aufweisen. Die Werkzeugmaschine kann dann eingerichtet sein, Aufnahmen der Umgebung aufzunehmen und zu speichern, auszuwerten und / oder zur Auswertung weiterzuleiten. Dies kann z. B. zu Dokumentationszwecken, beispielsweise zur Dokumentation eines Baufortschritts, nützlich sein.

Der Bauroboter kann auch eine mobile Plattform aufweisen. Die mobile Plattform kann ein Räderfahrwerk und / oder ein Kettenfahrwerk umfassen. Die mobile Plattform kann wenigstens 2 Freiheitsgrade aufweisen. Der Bauroboter kann insgesamt wenigstens zehn Freiheitsgrade aufweisen. Alternativ oder ergänzend ist denkbar, dass die mobile Plattform eine Flugplattform umfasst. Mit anderen Worten kann der Bauroboter auch als unbemanntes Flugobjekt ausgebildet sein.

In eigenen Untersuchungen hat sich ergeben, dass der Nutzen einer solchen als Bauroboter ausgebildeten mobilen Werkzeugmaschine vom Umfang abhängen kann, in dem die mobile Werkzeugmaschine einsetzbar ist. Je mehr die mobile Werkzeugmaschine einsetzbar ist, desto wirtschaftlicher kann ihr Einsatz insgesamt werden. Dies kann besonders wichtig sein, da derartige mobile Werkzeugmaschinen grundsätzlich, beispielsweise im Vergleich zu einfachen, handgehaltenen Elektrowerkzeugmaschinen, hohe Herstellungskosten aufweisen.

Die Datenschnittstelle kann ein Benutzersteuerelement zur Eingabe wenigstens eines Datensatzes durch einen Benutzer umfassen. Denkbar ist auch, dass die Datenschnittstelle zur Abfrage einer Internetressource ausgebildet ist. Ebenso ist denkbar, dass die Datenschnittstelle ausgebildet ist, zur Eingabe eine Datei-Datenquelle, beispielsweise eine sogenannte CSV-Datei, eine XML-Datei oder eine Datei nach dem "Industry Foundation Class"-Standard, auszulesen.

Häufig wird zwischen der Erstellung der Planung und der Bauumsetzung der Ablauf der Bauumsetzung geplant. In dieser Bauablaufplanung wird festgelegt, in welchen zeitlichen Schritten das Gebäudeteil schrittweise errichtet wird. Zu jedem der zeitlichen Schritte kann ein zugehöriger Ressourceneinsatz, insbesondere der Einsatz verfügbarer mobiler Werkzeugmaschinen, geplant werden. Sehr häufig wird erst im Rahmen dieser Bauablaufplanung oder sogar erst während der tatsächlichen Bauumsetzung festgestellt, dass das Gebäudeteil nicht wie geplant oder nur mit Zusatzaufwänden mit der mobilen Werkzeugmaschine erstellt werden kann. Dann ist die Planung abzuändern, was erhebliche Zusatzaufwände nach sich ziehen kann.

Daher ist es besonders günstig, wenn vor Beginn der Bauablaufplanung, insbesondere während der Planung, das Gebäudeteil in Abhängigkeit von der wenigstens einen Maschineneigenschaft geplant wird, sodass von vorneherein die mobile Werkzeugmaschine zur Umsetzung der Planung verwendbar ist.

Insbesondere ist denkbar, ein an und / oder in dem Gebäudeteil zu montierendes Bauelement in Abhängigkeit von der wenigstens einen Maschineneigenschaft auszuwählen. Beispielsweise kann bei einer als Bauroboter ausgebildete und mit einer Gesteinsbohrmaschine ausgestatteten mobilen Werkzeugmaschine ein maximal zulässiges Gewicht der Gesteinsbohrmaschine und damit beispielsweise ein maximal möglicher zu bohrender Durchmesser limitiert sein. Wenn nun beispielsweise ein Tragelement an einer Decke als Gebäudeteil vorzusehen ist, um am Tragelement Leitungen befestigen zu können, so kann die Auswahl der Tragelemente auf solche Tragelemente beschränkt werden, die mit Ankern befestigbar sind, die höchstens dem maximal möglichen zu bohrenden Durchmesser entsprechen. Denkbar ist auch, in Abhängigkeit von der Maschineneigenschaft, hier beispielsweise dem maximal möglichen Durchmesser, eine bestimmte Anzahl an Bauelementen, hier Tragelementen, zu wählen. Beispielsweise ist denkbar, um der Maschineneigenschaft gerecht zu werden, mehrere Bauelemente, im Beispiel also mehrere Tragelemente, anstelle eines einzigen Bauelements, das nicht der Maschineneigenschaft gerecht würde, vorzusehen.

Die als Bauroboter ausgebildete mobile Werkzeugmaschine kann einen individuell spezifischen Arbeitsbereich aufweisen. Der Arbeitsbereich kann beispielsweise von der Länge und / oder von der Anzahl der Freiheitsgrade des Manipulators abhängen. Die mobile Werkzeugmaschine kann dann eingesetzt werden, wenn zu erreichende Arbeitspositionen innerhalb ihres Arbeitsbereichs liegen bzw. wenn die mobile Werkzeugmaschine so positioniert werden kann, dass sie die geplanten Arbeitspositionen mit ihrem Arbeitsbereich erfassen kann. Daher kann es vorteilhaft sein, wenn eine das Gebäudeteil betreffende Länge, eine Breite und / oder eine Höhe und / oder ein das Gebäudeteil betreffender Abstand in Abhängigkeit von der wenigstens einen Maschineneigenschaft festgelegt wird. Ein das Gebäudeteil betreffender Abstand kann insbesondere relevant sein,

Bei einer Klasse von Verfahren ist denkbar, dass vor Beginn einer Bauablaufplanung eine, insbesondere bereits bestehende, Planung geprüft wird, ob die Planung kompatibel mit der wenigstens einen Maschineneigenschaft ist. Beispielsweise ist denkbar, dass diese Prüfung als Teil von Qualitätsprüfungen und / oder Sicherheitsprüfungen zur Akzeptanz einer beispielsweise von einem anderen Beteiligten, beispielsweise eines separaten Planungssystems, erfolgt. Bei negativem Prüfungsergebnis kann dann die Planung zur Anpassung wieder an den anderen Beteiligten zurückgesandt werden.

Wird von wenigstens zwei verschiedenen mobilen Werkzeugmaschinen jeweils wenigstens eine Maschineneigenschaft in das Planungssystem eingegeben, so kann die Planung nicht nur dahingehend optimiert werden, dass der Einsatz einer mobilen Werkzeugmaschine optimiert wird, sondern es wird darüber hinaus beispielsweise möglich, eine Auswahl zwischen den wenigstens zwei verschiedenen mobilen Werkzeugmaschinen für die spätere Bauumsetzung und / oder die Bauablaufplanung zu treffen und so die Bauablaufplanung und / oder die Bauumsetzung weiter zu optimieren.

Das Verfahren kann seine Vorteile besonders entfalten, wenn eine gebäudetechnische Anlage geplant wird. Die gebäudetechnische Anlage kann eine mechanische, elektrische oder fluidische Anlagen umfassen. Beispielsweise kann die gebäudetechnische Anlage Kälte-/Wärme-Technik, Ver- und Entsorgung, Elektrik, Wasserversorgung und -entsorgung, Zuluft und / oder Abluft oder dergleichen betreffen.

In den Rahmen der Erfindungen fällt des Weiteren ein **Computerprogrammprodukt** zum Erzeugen einer Planung nach einem dem vorbeschriebenen Verfahren, wobei das Computerprogrammprodukt eine Datenschnittstelle zur Eingabe der wenigstens einen Maschineneigenschaft in ein Planungssystem aufweist.

Das Computerprogrammprodukt kann als Programmcode ausgebildet sein. Das Computerprogrammprodukt kann auch auf einem Datenträger, beispielsweise einem tragbaren Datenträger wie beispielsweise einen Speicherstick, gespeichert sein. Denkbar ist auch, dass das Computerprogrammprodukt auf einem Rechnersystem, beispielsweise auf einem Cloud - basierten Rechnersystem, gespeichert ist. Von dort kann es beispielsweise über das Internet oder über eine andere datentechnische Verbindung herunterladbar sein.

In den Rahmen der Erfindung fällt auch ein **Planungssystem,** das das vorangehend beschriebene Computerprogrammprodukt aufweist. Das Planungssystem kann einen Rechner umfassen. Der Rechner kann einen Speicher sowie einen Mikroprozessor so wie Eingabe- und Ausgabevorrichtungen aufweisen. Das Computerprogrammprodukt kann auf dem Rechner ausführbar abgelegt sein. Somit kann das vorangehend beschriebene Verfahren ausgeführt werden, indem das Computerprogrammprodukt auf dem Rechner ausgeführt wird.

Die Datenschnittstelle kann ein oder mehrere der Vorangehend in Bezug auf die Datenschnittstelle beschriebenen Merkmale aufweisen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine als Bauroboter ausgebildete mobile Werkzeugmaschine,
- Fig. 2: ein Planungssystem und
- Fig. 3: ein Ablaufdiagramm eines Verfahren zum Erzeugen einer Planung.

In der nachfolgenden Beschreibung der Figuren werden zur Erleichterung des Verständnisses der Erfindung für gleiche oder sich funktional entsprechende Elemente jeweils die gleichen Bezugszeichen verwendet.

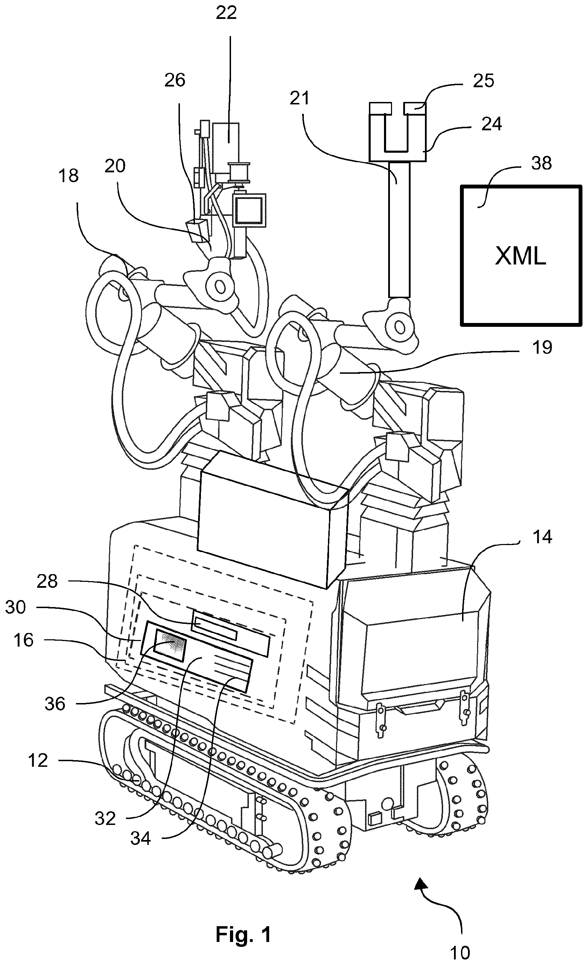

**Fig. 1** zeigt eine als Bauroboter ausgebildete mobile Werkzeugmaschine **10.** Die mobile Werkzeugmaschine 10 weist ein als Kettenfahrwerk ausgebildetes Fahrwerk **12** auf. In einem Gehäuse **14** der mobilen Werkzeugmaschine 10 ist ein Steuerraum **16** ausgebildet. In Fig. 1 ist der Steuerraum 16, der sich innerhalb des Gehäuses 14 befindet, lediglich schematisch angedeutet.

Die mobile Werkzeugmaschine 10 weist oberseitig des Gehäuses 14 einen ersten Manipulator **18** und einen zweiten Manipulator **19** auf. Die Manipulatoren 18, 19 sind als multiaxiale, steuerbare Arme ausgebildet. An ihren freien Enden befinden sich ein erster Endeffektor **20** beziehungsweise ein zweiter Endeffektor **21.**

Am ersten Endeffektor 20 ist ein Schraubensetzgerät **22,** insbesondere ein mit einem Schraubenmagazin versehenes Schraubensetzgerät, angeordnet. Am zweiten Endeffektor 21 ist eine Halterung **24** mit einem Greifer **25** angeordnet. Der Greifer 25 kann wenigstens einen steuerbaren Saugnapf aufweisen.

Der zweite Manipulator 19 ist zusammen mit seiner Halterung 24 eingerichtet, ein Bauelement in einer vorgegebenen Position zu halten. Dazu kann der Greifer 25 das Bauelement wahlweise aufnehmen, halten oder freigeben.

Die mobile Werkzeugmaschine 10 weist ferner eine Bildaufnahmeeinheit **26** zur Aufnahme optischer Aufnahmen so wie eine Bildverarbeitungseinheit **28** zur Bildverarbeitung der Aufnahmen auf. Die Bildaufnahmeeinheit 26 weist einen RGB- als auch einen time-of-flight-Sensor auf, sodass die Bildaufnahmeeinheit 26 in der Lage ist, Farbbilder inklusive Tiefeninformationen aufzunehmen. Die Bildverarbeitungseinheit 28 ist Teil einer Steuerung **30.** Die Steuerung 30 ist innerhalb des Gehäuses 14, insbesondere im Steuerraum 16, angeordnet. Sie und insbesondere die Bildverarbeitungseinheit 28 sind daher ebenfalls lediglich schematisch in Fig. 1 dargestellt.

Die mobile Werkzeugmaschine 10 ist zur Ausführung von Bauarbeiten, insbesondere zum Anordnen von Bauelementen an Gebäudeteilen, ausgebildet. Als Gebäudeteile können Böden, Decken und Wände bearbeitet werden. Die Bauarbeiten können eine Baustelle, beispielsweise eine Hochbau-Baustelle oder eine Tiefbau-Baustelle, betreffen.

Die mobile Werkzeugmaschine 10 ist eingerichtet, ein Bauelement am Gebäudeteil zu positionieren, zu halten und am Gebäudeteil anzubringen. Insbesondere kann er das Bauelement mit seinem zweiten Manipulator 19 und insbesondere mit der Halterung 24 in eine gewünschte Position bringen und mit Hilfe des ersten Manipulators 18, insbesondere mit dem Schraubensetzgerät 22, am Gebäudeteil durch Einschrauben von Schraubankern in vorab gefertigte Bohrlöcher befestigen.

Zur Ausführung derartiger Bauarbeiten wird die mobile Werkzeugmaschine 10 durch die programmierbare Steuerung 30 gesteuert.

Die Steuerung 30 umfasst eine Speichereinheit **32.** Die Steuerung 30 ist mit ausführbarem Programmcode **34** ausgestattet. Dazu ist der Programmcode 34 abrufbar und ausführbar in der Speichereinheit 32 gespeichert. Allgemein ist denkbar, dass ein Teil der Steuerung 30 oder die gesamte Steuerung 30 auf einem entfernten Rechnersystem, beispielsweise einem Cloudbasierten Rechnersystem, ausgebildet ist. In der Speichereinheit 32 ist ferner eine Planung **36** in Form eines CAD-Modells, insbesondere eines BIM-Modell, abgelegt. Die mobile Werkzeugmaschine 10 ist eingerichtet, aus der Planung 36 die von ihr zu erledigenden Bauaufgaben auszulesen und diese, sofern möglich, auszuführen.

Die mobile Werkzeugmaschine 10 weist dabei Maschineneigenschaften **38.** In Fig. 1 sind diese Maschineneigenschaften 38 lediglich schematisch dargestellt. Sie können beispielsweise in Form einer XML-Datei zusammengestellt sein.

Die Maschineneigenschaften 38 beschreiben dabei für die mobile Werkzeugmaschine 10 spezifische Eigenschaften, insbesondere Randbedingungen, mit denen die mobile Werkzeugmaschine 10 Bauaufgaben erledigen kann. Die Maschineneigenschaften 38 können beispielsweise Mindestabstände, insbesondere Mindestbreiten von Spalten betreffen, in denen die mobile Werkzeugmaschine 10 eine Bauaufgabe ausführen soll. Diese Mindestabstände können sich beispielsweise aus Abmessungen der Endeffektoren 20, 21 ergeben. Die Maschineneigenschaften 38 können ferner Längenangaben, insbesondere maximale und / oder minimale, Höhen, Breiten und / oder Tiefen, Flächen oder Volumenangaben oder dergleichen betreffen. Diese können sich beispielsweise aus technischen Daten der Manipulatoren 18, 19 und / oder der gesamten mobilen Werkzeugmaschine 10 ergeben. Auch können die Maschineneigenschaften 38 Gewichtsangaben umfassen, die beispielsweise maximal zulässige Traglasten oder dergleichen betreffen.

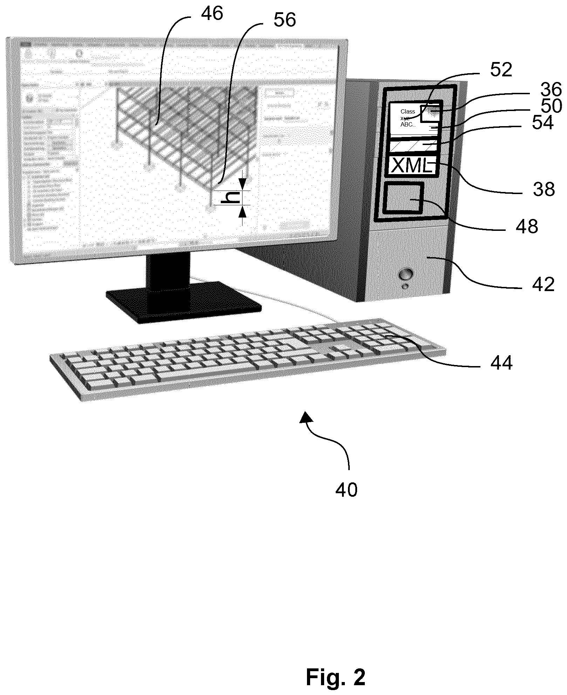

**Fig. 2** zeigt ein Planungssystem **40.** Das Planungssystem 40 umfasst einen Rechner **42.** Der Rechner 42 weist neben einer Eingabevorrichtung **44** und einer Ausgabevorrichtung **46** einen Mikroprozessor **48** und Speicher **50** auf. Im Speicher 50 ist ein Computerprogrammprodukt **52** abgelegt. Das Computerprogrammprodukt 52 kann auf dem Rechner 42, insbesondere mithilfe des Mikroprozessors 48, ausgeführt werden. Das Computerprogrammprodukt 52 weist eine Datenschnittstelle **54** zur Eingabe der Maschineneigenschaften 38 in das Planungssystem 40 auf. Dazu ist die Datenschnittstelle 54 eingerichtet, den Maschineneigenschaften entsprechende XML-Dateien einzulesen und auszuwerten und die enthaltenen Daten dem übrigen Rechner 42 zur weiteren Nutzung zur Verfügung zu stellen.

Im Speicher 50 ist ferner die Planung 36 abgelegt. Die Planung 36 kann auf dem Planungssystem 40 erstellt und / oder modifiziert werden. Im in Fig. 2 gezeigten Zustand stellt die Ausgabevorrichtung 46 die Planung 36 dar. Zu erkennen ist eine Höhe **h** als Abstand von einem Grund zu einem ersten Gebäudeteils **56** in Form von Stahlträgern einer Decke bzw. eines Bodens.

Damit also später die mobile Werkzeugmaschine 10 von unten an dem ersten Gebäudeteil 56 Bauarbeiten ausführen kann, muss die Höhe h mindestens der Mindesthöhe der mobilen Werkzeugmaschine 10 und höchstens der Maximalhöhe des höchsten durch die mobile Werkzeugmaschine 10 erreichbaren Punktes entsprechen. Dem vorliegenden Beispiel entsprechend bilden die Mindesthöhe und die Maximalhöhe einen Teil der Maschineneigenschaften 38.

Denkbar ist, dass das Planungssystem 40 als lokales und / oder, zumindest teilweise, als Cloudbasiertes Rechnersystem ausgebildet ist.

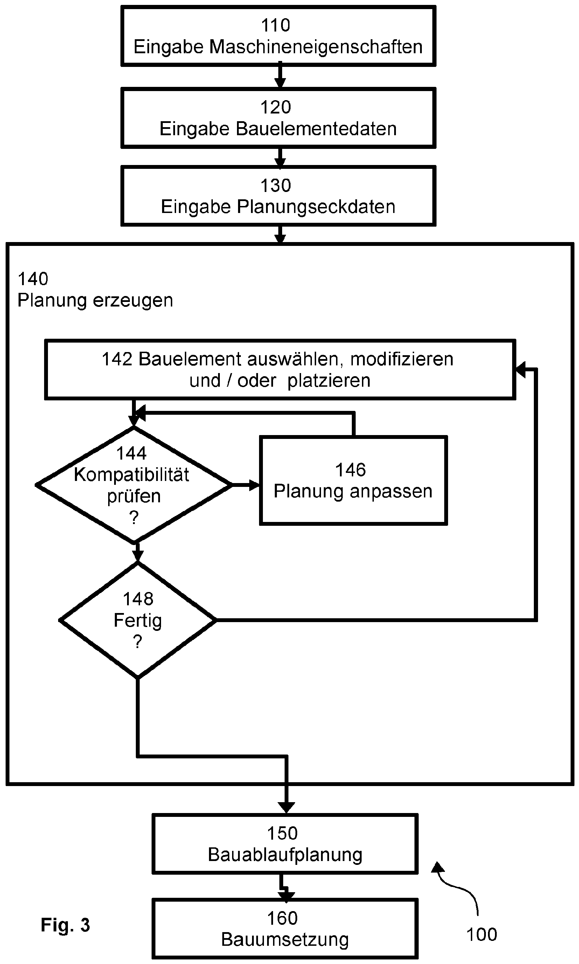

Mit Hilfe des Computerprogrammprodukts 52 kann auf dem Planungssystem 40 ein in Fig. 3 schematisch dargestelltes Verfahren **100** zum Erzeugen der Planung 36 durchgeführt werden.

In einer Initialisierungsphase **110** des Verfahrens 100 werden die Maschineneigenschaften 38 (siehe Fig. 1 und Fig. 2) der mobilen Werkzeugmaschine 10 in das Planungssystem 40 (siehe Fig. 2) über die Datenschnittstelle 54 in das Planungssystem 40 eingegeben, insbesondere eingelesen.

In einer weiteren Initialisierungsphase **120** können Bauelementedaten für diejenigen Arten von Bauelementen in das Planungssystem 40 eingegeben, beispielsweise eingelesen, werden, mit denen die Planung 36 (siehe Fig. 1, 2) bzw. das zu erstellende Gebäudeteil 56 (siehe Fig. 2) schlussendlich erstellt werden soll.

In einer dritten Initialisierungsphase **130** ist denkbar, auch Planungseckdaten in das Planungssystem 40 einzugeben. Die Planungseckdaten können Daten umfassen, die das zu erstellende Gebäudeteil 56 oder das gesamte zu erstellende Gebäude betreffen, beispielsweise Anzahl Ebenen, Anzahlen und Arten von Räumen, vorzusehende Ausstattungen usw.

Während einer Planungsphase **140** wird anschließend die Planung 36 erzeugt. Dazu werden in einer Konstruktionsphase **142** geeignete Bauelemente aus den Bauelementedaten entsprechend der Planungseckdaten ausgewählt, modifiziert und / oder platziert und damit der Planung 36 entsprechend hinzugefügt. Beispielsweise werden geeignete Stahlträger der Planung 36 hinzugefügt, um das Gebäudeteil 56 zu bilden.

In einer Prüfungsphase **144** wird geprüft, ob der dann erreichte Stand der Planung 36 kompatibel mit allen Maschineneigenschaften 38 ist oder ob Konflikte bestehen. Beispielsweise wird geprüft, ob das Gebäudeteil 56 mit den gewählten Bauelementen eine kompatible Höhe, also eine Höhe zwischen der Mindesthöhe und der Maximalhöhe, erreicht. Liegen Maschineneigenschaften 38 mehrerer mobiler Werkzeugmaschinen 10, beispielsweise unterschiedlichen Typs, vor, so kann in dieser Prüfungsphase 144 auch eine Auswahl getroffen werden, mit welchem Typ von mobiler Werkzeugmaschine 10 welche Bauaufgabe ausführbar und / oder am besten ausführbar ist. Insbesondere im Fall von Konflikten kann auch ein Vorschlag ermittelt werden, durch welche Anpassung der Konflikt gelöst werden kann und / oder bevorzugt gelöst werden sollte.

Ergeben sich Konflikte, so wird in einer Anpassungsphase 146 die Planung 36 angepasst. Dazu können die gewählten Bauelemente nach Bedarf wieder entfernt und / oder durch alternative, geeignetere Bauelemente ersetzt werden. Denkbar ist auch, die gewählten Bauelemente zu modifizieren, beispielsweise zu kürzen. Nach Abschluss der Anpassungen kann erneut gemäß der Prüfungsphase 144 geprüft werden.

Ergibt sich eine kompatible Planung, so wird anschließend in einer Planungsabschlussprüfung **148** geprüft, ob das gesamte Gebäudeteil 56 bzw. das gesamte zu planende Gebäude vollständig geplant ist und / oder ob die Planung 36 bereits alle Planungseckdaten erfüllt.

Denkbar ist, dass ein oder mehrere der Initialisierungsphasen 110, 120, 130 sowie der Phasen 142, 144, 146, 148 vollständig und / oder teilweise manuell durch einen Benutzer des Planungssystems 40 ausgeführt werden. Denkbar ist auch, ein oder mehrere dieser Initialisierungsphasen und Phasen vollständig automatisiert, insbesondere mithilfe des Planungssystems 40, auszuführen.

Als Ergebnis kann somit eine vollständige Planung 36 mithilfe des Verfahrens 100 erzeugt sein.

In dem vorliegenden Beispiel, bei dem die mobile Werkzeugmaschine 10 als Bauroboter ausgebildet ist, kann somit eine Planung 36 erstellt werden, die mit der mobilen Werkzeugmaschine 10 kompatibel ist, sodass zumindest bestimmte Bauaufgaben mit der mobilen Werkzeugmaschine 10 ausführbar sein können.

Denkbar ist, in einer anschließenden Bauablaufplanungsphase **150** basierend auf der Planung 36 einen Bauablauf zur Errichtung des Gebäudeteils 56 bzw. des zu errichtenden Gebäudes zu planen.

Abschließend kann dann das Gebäudeteil 56 bzw. das Gebäude in einer Bauumsetzungsphase 160 gemäß der Planung 36 sowie der Bauablaufplanung errichtet werden. Somit ergibt sich mitsamt der Bauumsetzungsphase 160 ein Verfahren 100 zur Herstellung des Gebäudeteils 56 und / oder eines Gebäudes.

### Bezugszeichenliste

- 10: Werkzeugmaschine
- 12: Fahrwerk
- 14: Gehäuse
- 16: Steuerraum
- 18: Manipulator
- 19: Manipulator
- 20: Endeffektor
- 21: Endeffektor
- 22: Schraubensetzgerät
- 24: Halterung
- 25: Greifer
- 26: Bildaufnahmeeinheit
- 28: Bildverarbeitungseinheit
- 30: Steuerung
- 32: Speichereinheit
- 34: Programmcode
- 36: Planung
- 38: Maschineneigenschaft
- 40: Planungssystem
- 42: Rechner
- 44: Eingabevorrichtung
- 46: Ausgabevorrichtung
- 48: Mikroprozessor
- 50: Speicher
- 52: Computerprogrammprodukt
- 54: Datenschnittstelle
- 56: Gebäudeteil
- 100: Verfahren
- 110: Initialisierungsphase
- 120: Initialisierungsphase
- 130: Initialisierungsphase
- 140: Planungsphase
- 142: Konstruktionsphase
- 144: Prüfungsphase
- 148: Planungsabschlussprüfung
- 150: Bauablaufplanungsphase
- h: Höhe

## Patentansprüche

1. **Verfahren (100) zum Erzeugen einer Planung (36)** eines Gebäudeteils (56) und / oder eines Gebäudes mit Hilfe eines Planungssystems (40), wobei wenigstens eine Maschineneigenschaft (38) einer mobilen Werkzeugmaschine (10) in das Planungssystem (40) über eine Datenschnittstelle (54) zur Eingabe der wenigstens einen Maschineneigenschaft (38) in das Planungssystem (40) eingegeben wird.

2. Verfahren (100) nach dem vorhergehenden Anspruch, **dadurch gekennzeichnet, dass** vor Beginn einer Bauablaufplanung das Gebäudeteil (56) in Abhängigkeit von der wenigstens einen Maschineneigenschaft (38) geplant wird.

3. Verfahren (100) nach dem vorhergehenden Anspruch, **dadurch gekennzeichnet, dass** ein an und / oder in dem Gebäudeteil (56) zu verwendendes Bauelement in Abhängigkeit von der wenigstens einen Maschineneigenschaft (38) ausgewählt wird.

4. Verfahren (100) nach dem vorhergehenden Anspruch, **dadurch gekennzeichnet, dass** eine das Gebäudeteil (56) betreffende Länge, eine Breite und / oder eine Höhe (h) und / oder ein das Gebäudeteil (56) betreffender Abstand in Abhängigkeit von der wenigstens einen Maschineneigenschaft (38) festgelegt wird.

5. Verfahren (100) nach einem der vorhergehenden Ansprüche, **dadurch gekennzeichnet, dass** vor Beginn einer Bauablaufplanung geprüft wird, ob die Planung (36) kompatibel mit der wenigstens einen Maschineneigenschaft (38) ist.

6. Verfahren (100) nach einem der vorhergehenden Ansprüche, **dadurch gekennzeichnet, dass** von wenigstens zwei verschiedenen mobilen Werkzeugmaschinen (10) jeweils wenigstens eine Maschineneigenschaft (38) in das Planungssystem (40) eingegeben wird.

7. Verfahren (100) nach einem der vorhergehenden Ansprüche, **dadurch gekennzeichnet, dass** eine gebäudetechnische Anlage geplant wird.

8. **Computerprogrammprodukt (52) zum Erzeugen einer Planung (36)** nach einem Verfahren (100) nach einem der vorhergehenden Ansprüche, **dadurch gekennzeichnet, dass** das Computerprogrammprodukt (52) eine Datenschnittstelle (54) zur Eingabe der wenigstens einen Maschineneigenschaft (38) in ein Planungssystem (40) aufweist.

9. **Planungssystem (40),** umfassend einen Rechner (42) und ein auf dem Rechner (42) ausführbares Computerprogrammprodukt (52) nach dem vorhergehenden Anspruch.
